## Europäisches Patentamt
## European Patent Office
## Office européen des brevets

(11) Publication number: **0 084 738**
**B1**

(12) **EUROPEAN PATENT SPECIFICATION**

(45) Date of publication of patent specification: **08.07.87**

(51) Int. Cl.⁴: **G 03 B 42/04**

(21) Application number: **82307023.0**

(22) Date of filing: **31.12.82**

(54) **X-Ray field defining mask.**

(30) Priority: **27.01.82 JP 11207/82**

(43) Date of publication of application:
**03.08.83 Bulletin 83/31**

(45) Publication of the grant of the patent:
**08.07.87 Bulletin 87/28**

(84) Designated Contracting States:
**DE FR NL**

(56) References cited:
**US-A-3 619 611**
**US-A-3 862 426**
**US-A-4 121 108**
**US-A-4 146 793**

(73) Proprietor: **Kabushiki Kaisha Toshiba**
**72, Horikawa-cho Saiwai-ku**
**Kawasaki-shi Kanagawa-ken 210 (JP)**

(72) Inventor: **Ogo, Yoshimasa c/o Patent Division**
**Tokyo Shibaura Denki K. K. 72 Horikawa-cho**
**Saiwai-ku Kawasaki-shi Kanagawa-ken (JP)**

(74) Representative: **Shindler, Nigel et al**
**BATCHELLOR, KIRK & EYLES 2 Pear Tree Court**
**Farringdon Road**
**London EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to an X-ray spot film device, and more particularly, to an X-ray field defining mask which is used in an X-ray spot film device of an X-ray table to make a selected number of radiographic exposures on a single film.

A conventional spot film device usually includes a frame support extending widthwise over the top of an X-ray table. A main carriage is mounted on the support to be advanced from a rear parked position to a forward radiographic position in which a film holder carried by the carriage is disposed in alignment with an X-ray beam that is projected from an X-ray source in the table through a patient. The film holder is mounted in a tray supported on an inner carriage which is translatable widthwise of the main carriage so that the centre of the X-ray beam may be made coincident with the area on the film holder on which a spot film exposure is desired. The area is further defined by superimposable X-ray field defining masks.

As is well known, spot film devices are also provided with a fluoroscopic device which permits an examining radiologist to visualize anatomy of interest and to make one or more radiographs in a choice of sizes by projecting the film holder forward and shifting it and the masks to obtain the desired sequence of radiographs. The fluoroscopic device on the spot film device is aligned with the X-ray source in the table, and the film cassette is then, of course, retracted from the beam. The film holder may be shifted relative to the masks to expose different areas of the film and to make exposures of different sizes.

In prior art spot film devices, two X-ray field defining masks having elongated rectangular apertures disposed at right angles to each other are used. The masks are mounted for translation on a pair of tracks which are arranged parallel to one another near opposite margins of the support. These masks are translated by a mask drive system which includes a reversible servo motor. One of the masks is moved manually into the path of the X-ray beam when two adjacent widthwise exposures are to be made on the film. The other mask is disposed in the beam when two adjacent exposures lengthwise of the film are desired. The masks can also be superimposed so that their rectangular apertures are transverse to one another and a smaller aperture is formed where the apertures of the two masks overlie one another; the film is positioned relative to that smaller aperture to expose a quadrant or corner area of the film, and then the film may be shifted three or more times to expose the remaining three quadrants.

The mask is made having a laminar construction in order that it may have lightweight strength and yet sufficient X-ray attenuation in the appropriate areas to cut off undesired portions of the X-ray beam and define a sharp field. The laminate is made of stiff sheet metal such as stainless steel or brass on which a thinner lead sheet is bonded.

An example of the conventional spot film device is disclosed in U.S. Patent 3,862,426 issued January 21, 1975. Such masks have, however, certain undesirable characteristics. For example, the mask has greater external dimensions than the X-ray film or film holder. This requires the spot film device to have a large space for the parked position to which the masks are retracted when not in use. Each mask is made of stacked stiff metal sheets so that the power on the driving system for driving the mask through most of its travel is increased by the weight of the mask. Furthermore, the longitudinal edge of the aperture in the mask is subject to flexing due to its low flexural rigidity. Attempts have been made to prevent collision between the masks by increasing, in the direction perpendicular to the mask sliding plane, the spacing between the tracks in which the masks slide. However, such spacing of the masks descreases the quality of the X-ray image.

An object of the invention is to minimize the size of the mask and therefore the external dimensions of the X-ray spot film device. Another object is to reduce the length of the X-ray spot film device in the direction in which the film holder slides.

A further object of this invention is to provide a field defining mask which is lightweight while having high strength and high flexural rigidity, and thereby to reduce the time and the power consumed by the driving system in moving the mask between a radiographic position and parked position.

A further object is to provide a design of an X-ray field defining mask such that the distance between two mask sliding planes can be reduced.

According to the present invention, there is provided an X-ray field defining mask for a spot film device characterised in that it comprises X-ray transparent support plate means which readily transmits X-rays but which does not have an aperture, and X-ray shielding plate means made of an X-ray shielding material mounted on said transparent plate means and arranged so as to define an X-ray field aperture. Preferably, the X-ray transparent plate means is made essentially of an epoxide synthetic resin strengthened with carbonic fibrous material.

The spot film device is used with an X-ray table, the device including an X-ray defining mask and mask driving means for driving the mask between a parked or film loading and unloading position and a radiographic active position aligned with the path of an X-ray beam from an X-ray source.

Because the transparent plate means provide adequate rigidity, it is unnecessary for the mask to have edges outside the dimensions of the X-ray film. As a consequence the mask dimensions may be smaller than previous and may be equal to the dimensions of the film.

The invention includes a spot film device adapted for use with an X-ray table, comprising an X-ray field defining mask, a mask driving means for translating the mask between a parked or a film loading and unloading position and a radiographic active position where an X-ray beam from an X-ray source may impinge on said mask, and a cassette for film to be exposed to the X-ray beam, characterised in that the mask comprises X-ray transparent plate means for transmitting the X-ray beam and having a size comparable to that of an X-ray film and which is made of an X-ray transparent material containing only elements of low atomic number, and X-ray shielding plate means secured to the X-ray transparent plate means for defining in conjunction with the transparent plate means an X-ray field which transmits X-ray through the X-ray transparent plate means.

The invention will be more readily understood by way of example from the following description of X-ray field defining masks in accordance therewith, reference being made to the accompanying drawings, in which

Figure 1 is a perspective view of a spot film device employing a first form of X-ray field defining masks;

Figure 2 is a side view of the spot film device shown in Figure 1;

Figure 3 is a perspective view of a driving mechanism for the X-ray field defining masks of Figure 1;

Figure 4 shows another form of X-ray field defining mask;

Figures 5 and 6 show alternative constructions for the X-ray field defining masks; and

Figure 7 is a partial cross-section of the junction portion of the X-ray field defining mask of Figure 6.

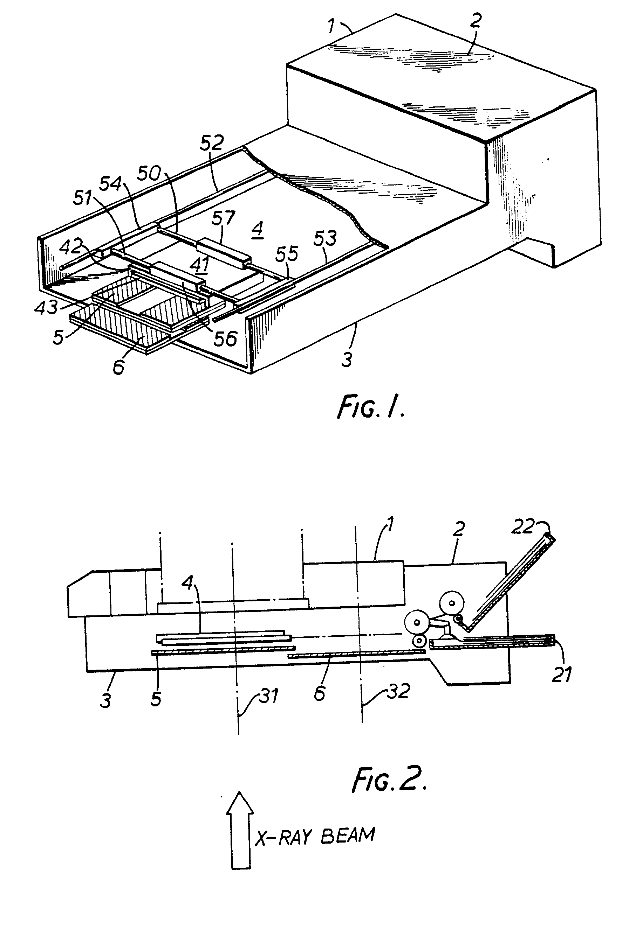

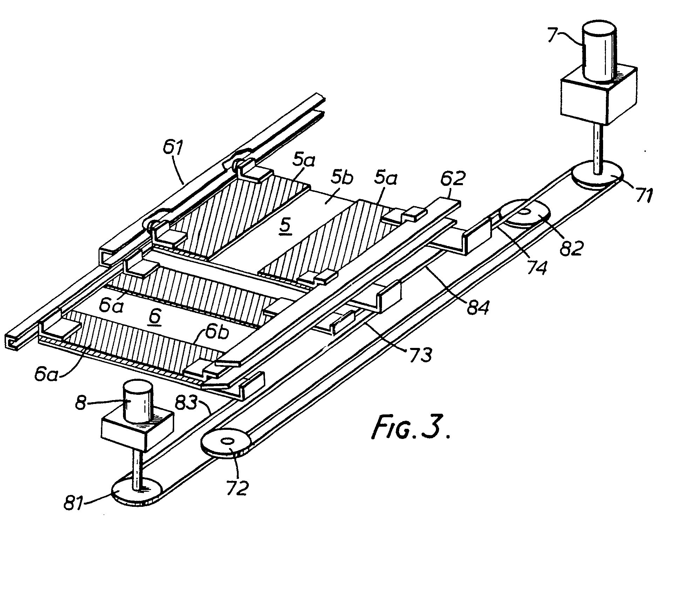

Referring now to the drawings, wherein like reference numerals designate identical or corresponding parts throughout the several views, and more particularly to Figures 1 and 2 thereof, the spot film device is generally indicated at 1 and includes a housing having an upstanding portion 2 and a part forming a tunnel 3. Located in the upstanding portion 2 is a box-like film supply or feed magazine 21 and an exposed film receiving magazine 22. The tunnel 3 has an opening or window, not shown, for the siting of an X-ray image intensifier for fluoroscopy. A movable cassette assembly 4 is movable in tunnel 3 between a parked or a film loading and unloading position 32 and a radiographic active position 31 aligned with the path of an X-ray beam from the X-ray source below the spot film device, as shown in Figure 2. The cassette assembly 4 is transported between the forward active radiographic position 31 and the parked or film loading or unloading position 32. Furthermore, an inner carriage 41 mounted on the movable cassette assembly can be moved transversely in either direction to enable a series of radiographs to be taken on the same film.

The inner carriage 41 is carried on a pair of widthwise rods 50 and 51. A pair of parallel tracks 52 and 53 are mounted within the housing. The cassette assembly 4 has slides 54 and 55 embracing tracks 52 and 53 and enabling the cassette assembly to slide longitudinally; the slides 54 and 55 may be provided with rollers and sleeve bearings, not shown. The inner carriage 41 has slides 56 and 57 similar to slides 54, 55 of the cassette assembly 4. The inner carriage 41 includes a cover 42 for holding a cassette 43 which includes a plate to which an X-ray intensifying screen on which the film rests during exposure is held, and a cover which includes a light metal plate to which is adhered a layer of resilient polyurethane foam on the bottom of which is another intensifying screen, not shown.

Upper mask 5 and lower mask 6 are mounted for translation longitudinally within tunnel 3 on pairs of tracks arranged parallel to one another; in Figure 3 the tracks for the upper mask are given the reference numerals 61 and 62. Masks 5 and 6 are advanced to the radiographic position 31 and retracted to the parked position 32 by means of reversible servo motors 7 and 8 respectively.

The upper mask drive system includes a sprocket-like pulley 71 on the shaft of motor 7. Situated near the front end of the housing of the spot film device is a rotary idler pulley 72. Running on drive pulley 71 and idler pulley 72 is an open loop belt which has opposite ends 73 and 74 connected to the leading and trailing edges of mask 5. Operation of motor 7 in one direction will retract mask 5 to the parked position 32 and rotation of the motor 7 in the opposite direction will advance mask 5 to position 31 in the path of the X-ray beam.

The drive system for lower mask 6 is similar to that for upper mask 5 which has just been described. It includes mask 6, a drive pulley 81 on the shaft of motor 8, an idler pulley 82 spaced therefrom, and a belt which has opposite ends 83 and 84 connected to the leading and trailing edges of mask 6.

Preferred constructions of masks are illustrated in Figures 3, 4, 5 and 6.

In Figure 3, each mask 5 or 6 consists of top plates 5a or 6a and bottom plates 5b or 6b. The top plates 5a, 6a are made of an X-ray shielding material, such as lead, which blocks the passage of an X-ray beam from the X-ray source to the X-ray film. The bottom plate 5b, 6b is made of a material which is transparent to X-rays and has a comparatively high rigidity, such as epoxide cast resin strengthened with carbonic fibrous material. An X-ray transparent material is used to enable a part of each mask to transmit X-rays in order to expose different areas of the film and to make exposures of different sizes without a rectangular aperture. The top plates 5a, 6a can be bonded to the bottom plates 5b, 6b in the manner shown in Figure 3. The use of carbon fibre tissue embedded in epoxy synthetic cast resin in a medical X-ray device is described in U.S. Patent No. 4,146,793 issued March 27, 1979.

In the fabrication of the upper mask 5, a pair of the top plates 5a made of X-ray shielding material are bonded to the bottom plate 5b made of X-ray transparent material so that they extend longitudinally parallel to the tracks 61 and 62 but are spaced apart transversely. The two top plates 5a form between them a rectangular, X-ray transparent, strip extending longitudinally and define a sharp X-ray field used for exposing a narrow longitudinal band of the film. The bonding agent or adhesive is an epoxy selected to have a low X-ray attenuation as well as the ability of being evenly distributed.

The lower mask 6 is similarly fabricated. A pair of top plates 6a made of X-ray shielding material are bonded to the bottom plate 6b made of X-ray transparent material. The top plates 6a extend perpendicularly to the tracks 61 and 62 and the spacing between the top plates 6a defines a sharp X-ray field for exposing transverse strips of the film. The external dimensions of the masks 5 and 6 are similar to that of the X-ray film, with the top plate having a thickness of about 1 mm, and the bottom plate having a thickness of about 0.5—2 mm.

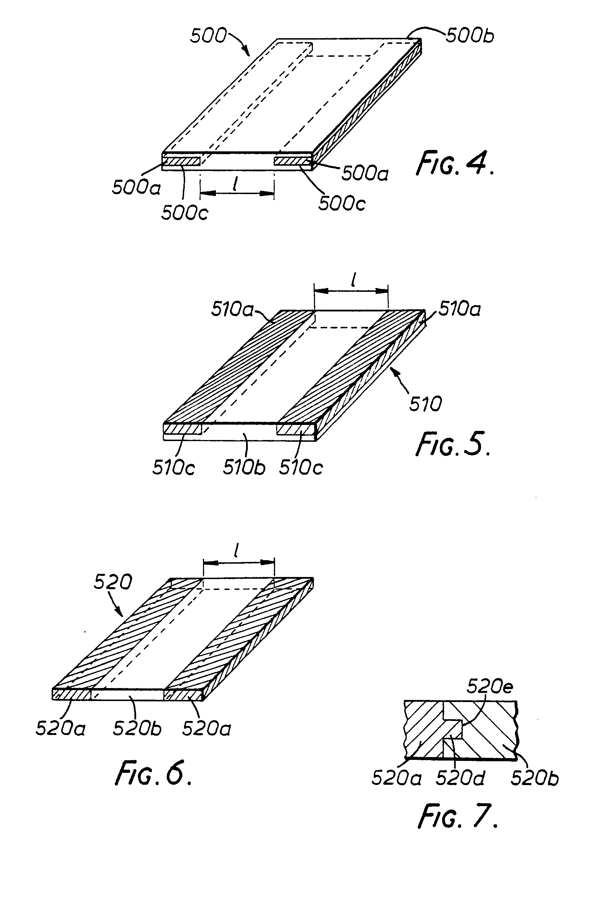

In Figure 4, an X-ray transparent sheet 500b corresponding to the bottom plate 5b in Figure 3 has a pair of planer grooves 500c formed in the edges thereof. The X-ray shielding sheets 500a corresponding to the top plates 5a in Figure 3 are then inserted into, and bonded in, the grooves 500c as shown. This mask 500 has a smaller thickness than the mask 5 having two superposed plates.

In Figure 5, the X-ray transparent plate 510b corresponding to the bottom plate 5b in Figure 3 has elongate notches 510c which are located longitudinally in the upper portion of the plate 510b along the edges thereof. The X-ray shielding plates 510a corresponding to the top plates 5a in Figure 3 are tightly engaged in the elongate notches 510c. The height and width of each elongate notch 510c is the same as the thickness and width respectively of the X-ray shielding plate 510a.

Figures 6 and 7 illustrate a modification in which tongue and groove joints are employed. The mask 520 includes an X-ray transparent plate 520b and X-ray shielding plates 520a secured to the edges of plate 520b and flush with the X-ray transparent plate 520b. Each of the X-ray shielding plates 520a has a planar rib 520d which engages a corresponding planar groove 520e formed on each side edge of the X-ray transparent plate 520b. The planar ribs 520d of the X-ray shielding plates 520a are firmly fitted in the corresponding planar grooves on both sides of the X-ray transparent plate 520b and bonded by a bonding agent or adhesive. This tongue and groove joint, as illustrated in Figure 7, increases rigidity. In this joint, the part of the X-ray transparent plate 520b which transmits X-rays is decreased by the inlaying of the ribs 520d made of the X-ray shielding material.

Polyphenylene is preferred as the material of the X-ray transparent material, although it is possible to use instead polyester, epoxy phenolic, polyimide systems and all other epoxide resins. Epoxide synthetic resins strengthened with carbonic fibrous material have good X-ray transparency because they contain only elements of low atomic number.

Obviously, numerous modifications and variations of the present invention are possible in the light of the above teachings. It is therefore to be understood that within the scope of the appended claims, the invention may be practiced otherwise than as specifically described herein.

**Claims**

1. An X-ray field defining mask for a spot film device characterised in that it comprises X-ray transparent support plate means (5b, 6b; 500b, 510b; 520b) which readily transmits X-rays but which does not have an aperture, and X-ray shielding plate means (5a, 6a; 500a; 510a; 520a) made of an X-ray shielding material mounted on said transparent plate means and arranged so as to define an X-ray field aperture.

2. An X-ray field defining mask according to claim 1, in which the X-ray transparent plate means comprises a bottom plate (5b, 6b) made of an X-ray transparent material, and the X-ray shielding plate means comprise top plates (5a, 6a) which are made of an X-ray shielding material and which are bonded to the bottom plate (5b, 6b) to define the sharp X-ray field.

3. An X-ray field defining mask according to claim 1, in which the X-ray transparent plate means comprises an X-ray transparent plate (500b) having edges in which a pair of planar grooves (500c) are respectively formed, and the X-ray shielding plate means comprise X-ray shielding plates (500a) which are inserted into those grooves (500c).

4. An X-ray field defining mask according to claim 1, in which the X-ray transparent plate means comprises an X-ray transparent plate (510b) having in its upper portion elongate notches (510c) extending along opposed edges of the transparent plate, and the X-ray shielding means comprise X-ray shielding plates (510a) engaged in those elongated notches (510c).

5. An X-ray field defining mask according to claim 1, in which the X-ray transparent plate means comprises an X-ray transparent plate (520b) having opposed sides each provided with a groove (520e) therein, and the X-ray shielding plate means comprise X-ray shielding plates (520a) having ribs (520d) fitted and secured in the planar grooves (520e).

6. An X-ray field defining mask according to any one of the preceding claims, in which the X-ray transparent plate means is made essentially of an epoxide synthetic resin strengthened with carbonic fibrous material.

7. An X-ray field defining mask according to any one of the preceding claims, in which the X-ray shielding plate means comprises a lead plate.

8. A spot film device adapted for use with an X-ray table, comprising an X-ray field defining mask (5, 6, 500, 510, 520), a mask driving means (7, 71—74; 8, 81—84) for translating the mask between a parked or a film loading and unloading position (32) and a radiographic active position (31) where an X-ray beam from an X-ray source may impinge on said mask (5, 6) and a cassette (41) for film to be exposed to the X-ray beam, characterised in that the mask comprises X-ray transparent plate means which readily transmits X-rays, but which does not have an aperture (5b, 6b, 500b, 510b, 520b) for transmitting the X-ray beam beam and having a size comparable to that of an X-ray film and which is made of an X-ray transparent material containing only elements of low atomic number, and X-ray shielding plate means (5a, 6a, 500a, 510a, 520a) secured to the X-ray transparent plate means for defining in conjunction with the transparent plate means an X-ray field which transmits X-ray through the X-ray transparent plate means.

**Patentansprüche**

1. Röntgenfeld definierende Maske für ein Punktfilmgerät, dadurch gekennzeichnet, daß sie eine für Röntgenstrahlen durchlässige Trägerplattenanordnung (5b, 6b; 500b, 510b; 520b) aufweist, die Röntgenstrahlen leicht überträgt, aber keine Öffnung aufweist, und eine Röntgentstrahlen abschirmende Plattenanordnung (5a, 6a; 500a; 510a; 520a) aufweist, die aus einem Röntgenstrahlen abschirmenden Material besteht, das auf die durchlässige Plattenanordnung aufgebracht ist und so angeordnet ist, daß es eine Röntgenfeldöffnung definiert.

2. Röntgenfeld definierende Maske nach Anspruch 1, dadurch gekennzeichnet, daß die Röntgenstrahlen durchlässige Plattenanordnung eine Bodenplatte (5b, 6b) aus einem für Röntgenstrahlen durchlässigen Material aufweist und daß die Röntgenstrahlen abschirmende Plattenanordnung obere Platten (5a, 6a) aufweist, die aus einem Röntgenstrahlen abschirmenden Material bestehen und mit der Bodenplatte (5b, 6b) verbunden sind zum Definieren des scharfen Röntgenfeldes.

3. Röntgenfeld definierende Maske nach Anspruch 1, dadurch gekennzeichnet, daß die für Röntgenstrahlen durchlässige Plattenanordnung eine für Röntgenstrahlen durchlässige Platte (500b) umfaßt, in deren Kanten ein ebenes Nutenpaar (500c) ausgebildet ist, und daß die Röntgenstrahlen abschirmende Plattenanordnung Röntgenstrahlen abschirmende Platten (500a) aufweist, die in diese Nuten (500c) eingesetzt sind.

4. Röntgenfeld definierende Maske nach Anspuch 1, dadurch gekennzeichnet, daß die für Röntgenstrahlen durchlässige Plattenanordnung eine für Röntgenstrahlen durchlässige Platte (510b) aufweist, in deren oberem Abschnitt sich längsverlaufende Ausnehmungen (510c) befinden, die entlang genenüberliegender Kanten der durchlässigen Platte angeordnet sind, und daß die Röntgenstrahlen abschirmende Plattenanordnung Röntgenstrahlen abschirmende Platten (510a) aufweist, die sich in diesen längsverlaufenden Ausnehmungen (510c) befinden.

5. Röntgenfeld definierende Maske nach Anspruch 1, dadurch gekennzeicht, daß die für Röntgenstrahlen durchlässige Plattenanordnung eine für Röntgenstrahlen durchlässige Platte (520b) aufweist, bei der gegenüberliegende Seiten jeweils mit einer Nut (520e) ausgestattet sind, und daß die Röntgenstrahlen abschirmende Plattenanordnung Röntgenstrahlen abschirmende Platten (520a) mit Rippen (520d) aufweist, die in die ebenen Nuten (520e) eingreifen und in diesen befestigt sind.

6. Röntgenfeld definierende Maske nach einem der vorhergehenden Ansprüche, dadurch gekennzeichnet, daß die für Röntgenstrahlen durchlässige Plattenanordnung im wesentlichen aus einem mit Kohlenstoffasermaterial verstärktem Epoxid-Kunstharz besteht.

7. Röntgenfeld definierende Maske nach einem der vorhergehenden Ansprüche, dadurch gekennzeichnet, daß die Röntgenstrahlen abschirmende Plattenanordnung eine Bleiplatte aufweist.

8. Punktfilmgerät zur Verwendung mit einem Röntgentisch, mit einer Röntgenfeld definierenden Maske (5, 6, 500, 510, 520), einer Maskenantriebseinrichtung (7, 71—74; 8, 81—84) zur Verschiebung der Maske zwischen einer Parkstellung oder einer Filmlade- und -entladestellung (32) und einer Röntgenstellung (31), in der die Maske (5, 6) von einem Röntgenstrahl einer Röntgenstrahlquelle beaufschlagbar ist, und mit einer Kassette (41) für vom Röntgenstrahl zu belichtende Filme, dadurch gekennzeichnet, daß die Maske eine für Röntgenstrahlen durchlässige Plattenanordnung aufweist, die leicht Röntgenstrahlen durchläßt, aber keine Öffnung (5b, 6b, 500b, 510b, 520b) zur Übertragung des Röntgenstrahles aufweist und die eine mit einem Röntgenfilm vergleichbare Größ aufweist und aus einem für Röntgenstrahlen durchlässigen Material besteht, das Elemente mit geringer Atomnummer enthält, sowie eine Röntgenstrahlen abschirmende Plattenanordnung (5a, 6a, 500a, 510a, 520a), die an der für Röntgenstrahlen durchlässigen Plattenanordnung befestigt ist, um in Verbindung mit der durchlässigen Plattenanordnung ein Röntgenfeld zu definieren, das Röntgenstrahlen durch die für Röntgenstrahlen durchlässige Plattenanordnung überträgt.

**Revendications**

1. Masque définissant un champ radiographique pour un dispositif de prise de vues locales ou ponctuelles caractérisé en ce qu'il comprend une plaque de support transparente aux rayons X (5b, 6b, 500b, 510b, 520b) qui laisse facilement passer les rayons X mais qui ne présente pas d'ouverture, et une plaque opaque aux rayons X (5a, 6a, 500a, 510a, 520a) faite d'une matière arrêtant les rayons X montée sur ladite plaque transparente et arrangée pour définir une ouverture pour un champ radiographique ou radioscopique.

2. Masque radiographique selon la revendication 1, caractérisé en ce que la plaque transparente aux rayons X se compose d'une plaque inférieure (5b, 6b) faite d'une matière transparente aux rayons X, tandis que la plaque interceptant les rayons X se compose de plaques supérieures (5b, 6b) pour délimiter un champ de rayons X net.

3. Masque selon la revendication 1, caractérisé en ce que la plaque transparente comprend une plaque transparente aux rayons X (500b) dont les bords présentent deux rainures planes (500c), tandis que la plaque opaque aux rayons X comprend des plaques (500a) qui sont insérées dans ces rainures.

4. Masque selon la revendication 1, caractérisé en ce que la plaque transparente aux rayons X comprend une plaque (510b) dont la partie supérieure présente des rainures allongées (510c) s'étandant le long de deux bords opposés, tandis que la plaque opaque aux rayons X comprend des plaques (510a) engagées dans ces rainures (510c).

5. Masque selon la revendication 1, caractérisé en ce que la plaque transparente comprend une plaque (520b) dont deux bords opposés présentent une rainure (520e), tandis que la plaque opaque aux rayons X comprend des plaques (520a) ayant des languettes ou des nervures emboîtées et fixées dans lesdites rainures (520e).

6. Masque selon l'une quelconque des revendications précédentes, caractérisé en ce que la plaque transparente aux rayons X est essentiellement faite d'une résine époxyde renforcée d'une matière fibreuse carbonée.

7. Masque selon l'une quelconque des revendications précédentes, caractérisé en ce que la plaque opaque aux rayons X est une plaque de plomb.

8. Dispositif de prise de vues locales ou ponctuelles adapté à être utilisé avec une table de radiographie ou de radioscopie que comprend un masque définissant un champ de rayons X (5, 6, 500, 510, 520), un moyen (7, 71—74, 8, 81—84) pour entraîner le masque entre une position de repos ou inactive ou une position de chargement et de déchargement de film (32) et une position radiographique active (31) où le faisceau d'une source de rayons X peut venir frapper ledit masque (5, 6) et une cassette (41) contenant le film devant être impressionné ou exposé par les rayons X, caractérisé en ce que ledit masque comprend une plaque transparente aux rayons X, mais qui n'a pas d'ouverture (5b, 6b, 500b, 510b, 520b) pour transmettre le faisceau de rayons X et ayant des dimensions comparables à celles de ce film radiographique, et qui est faite d'une matière transparente aux rayons X ne contenant que des éléments ayant un petit nombre atomique, et une plaque opaque aux rayons X (5a, 6a, 500a, 510a, 520a) fixée à la plaque transparente aux rayons X afin de délimiter avec elle un champ radiographique qui transmet les rayons X traversant la plaque transparente aux rayons X.

0 084 738

FIG. 1.

FIG. 2.

X-RAY BEAM

1

*Fig.3.*

FIG.4.

FIG.5.

FIG.6.

FIG.7.